# EUROPÄISCHE PATENTSCHRIFT

(11) **EP 2 030 747 B1**
(45) Veröffentlichungstag und Bekanntmachung des Hinweises auf die Patenterteilung: **17.02.2010**
(21) Anmeldenummer: 08015023.8
(22) Anmeldetag: 26.08.2008
(51) Int. Cl.: B27N 3/14, B32B 3/18, B32B 7/12, B32B 21/13, E04C 2/10

(54) **LEICHTBAUPLATTE SOWIE HERSTELLUNGSVERFAHREN DAFÜR**
LIGHTWEIGHT BUILDING SLAB AND MANUFACTURING METHOD
PANNEAU DE CONSTRUCTION LÉGER AINSI QUE SON PROCÉDÉ DE FABRICATION

(30) Priorität: 26.08.2007 DE 102007040431
(43) Veröffentlichungstag der Anmeldung: 04.03.2009
(73) Patentinhaber: Moralt Tischlerplatten GmbH & Co. KG, 83646 Bad Tölz (DE)
(72) Erfinder: Feile, Klaus, 83661 Lenggries (DE)
(74) Vertreter: Säger, Manfred

(56) Entgegenhaltungen:
- EP-A- 1 584 461
- WO-A-00/68527
- DE-A1- 2 524 097
- DE-A1- 19 831 019
- FR-A- 1 397 431
- US-A- 1 734 826

## Beschreibung

Die Erfindung betrifft eine gattungsgemaesse normal entflammbare Holzwerkstoffplatte nach dem Oberbegriff des Hauptanspruchs, nämlich eine normal entflammbare Holzwerkstoffplatte mit einer Mittellage und mit zumindest je einer auf diese aufgeleimten, den äusseren Abschluss der Holzwerkstoffplatte bildenden Aussenschicht aus einem Holzwerkstoff beiderseits der Mittellage, wobei die Mittellage als aus miteinander verleimten Stäbchen bestehende, sogenannte Stäbchenlage ausgebildet ist, deren Holzfasern im wesentlichen parallel zueinander sowie rechtwinklig zu jeder Aussenschicht verlaufen.

Holzwerkstoffplatten sind in einer Vielzahl von Ausführungsformen bekannt (DE 198 31 019 A1; FR 1 397 431; US 1 734 826). Auch solche Holzwerkstoffplatten mit einer als Stablage ausgebildeten Mittellage sind bekannt (EP 1 584 461 A1) und haben sich insbesondere fuer Tuerrohlinge bewaehrt. Allerdings weisen sie bei Klima- sowie Temperaturaenderungen eine starke Welligkeit auf, was unerwuenscht ist. Es hat sich auch herausgestellt, dass die Holzwerkstoffplatte im Brandfall einer starken Verwindung unterliegt, die, auch wegen ihres hohen Gewichts groessere Formate verbietet.

Es ist schliesslich eine gattungsgemässe Holzwerkstoffplatte nach dem Oberbegriff des Hauptanspruchs bekannt (WO 00/68527 A1). Diese offenbart nur eine mit einfachen Mitteln sauber zurichtbare Schnellbau- und Schalungstafel.

Der Erfindung liegt daher die Aufgabe zugrunde, eine gattungsgemaesse normal entflammbare Holzwerkstoffplatte nach dem Oberbegriff des Hauptanspruchs bei nicht schlechteren Brandschutzeigenschaften gleichzeitig mit geringerer Welligkeit und weniger Verwindung auszubilden.

Diese Aufgabe wird bei einer gattungsgemässe Holzwerkstoffplatte nach dem Oberbegriff des Hauptanspruchs erfindungsgemäss durch dessen kennzeichnende Merkmale, also dadurch gelöst, dass die Aussenschichten auf die Mittellage mittels eines ersten Leims aufgeleimt sind, dass die Stäbchen der Mittellage miteinander mit einem zweiten Leim verleimt sind, dass der erste Leim als "Flächenleim" ein Harnstoff-Formaldehyd-Klebstoff (KUF) und der zweite Leim als "Mittellagenleim" ein Weiss- oder Stärkeleim ist.

Mit der erfindungsgemaessen Holzwerkstoffplatte wird infolge der als Staebchenlage ausgebildeten Mittellage eine ruhigere Oberflaeche und damit eine nur geringe Welligkeit bei Klima- und/oder Temperaturaenderungen erzielt. Zugleich wird durch die Staebchenlage aufgrund der Ausrichtung der Holzfasern beziehungsweise Kapillaren im wesentlichen parallel zueinander bei Hitzeeinwirkung nur eine Zunahme ihrer Dicke, nicht aber in anderen Dimensionen bewirkt, so dass insoweit keine Scher- oder Verwindungskräfte auftreten. Dadurch wird nicht nur eine hohe Stabilitaet und eine geringere Verwindung der Brandschutzplatte erreicht, sondern es sind aufgrunddessen groessere Plattenformate möglich. Daher erweist sich die Mittellage der erfindungsgemässen Holzwerkstoffplatte im Brandfall als deren stabilstes tragendes Element, welches wegen der zuerst verkohlenden bzw. abbrennenden Aussenschicht erst zuletzt den Flammen ausgesetzt ist. Diese Stabilität wird noch aufgrund des als hoch hitzebestaendigen Weiss- oder Staerkeleim ausgebildeten zweiten Leims unterstützt. Dagegen ist der Harnstoff-Formaldehyd-Klebstoff aufweisende erste Leim zwischen den ebenfalls normal entflammbaren Aussenschichten und der Mittellage ausgesprochen brandhemmend.

Insgesamt wird mit der Erfindung also eine überraschend einfach aufgebaute, normal entflammbare, grossformatige Holzwerkstoff- platte mit geringer Welligkeit an deren Oberfläche bei ausgezeichneter Stabilität im Brandfall bereitgestellt.

Weitere zweckmässige Ausgestaltungen und Weiterbildungen des erfindungsgemässen Herstellungsverfahrens der Holzwerkstoffplatte sind in den betreffenden Unteransprüchen gekennzeichnet.

Ein bevorzugtes Ausführungsbeispiel wird nachfolgend unter Bezugnahme auf die Zeichnung näher erläutert. In dieser zeigt:
- Figur 1: eine erste Ausführungsform der erfindungs- gemässen Holzwerkstoffplatte in teilweise abgebrochener perspektivischer Ansicht und
- Figur 2: die Einzelheit II gemäss Figur 1.

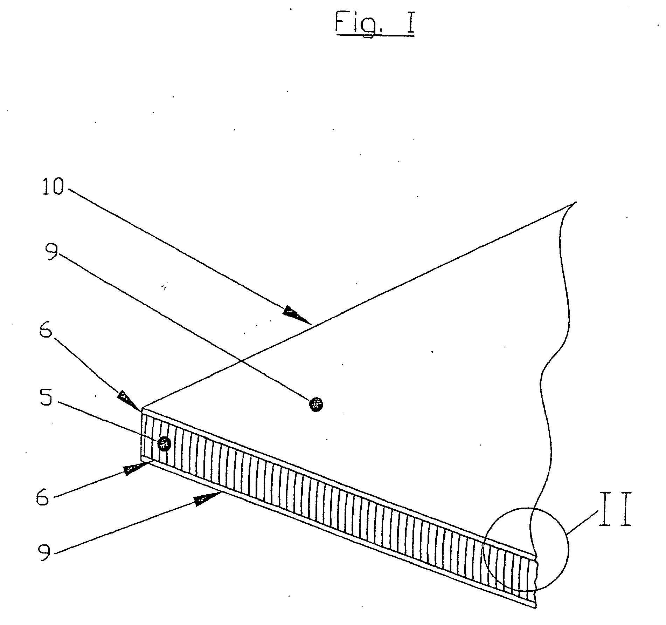

Die normal entflammbare Holzwerkstoffplatte -mit einer Gesamtdicke von maximal 58mm, vorzugsweise 44 mm oder 54 mm- insbesondere für eine Türrohling ist in Figur 1 mit 10 bezeichnet. Sie weist eine Mittellage 5 und beiderseits derselben zumindest je eine den äusseren Abschluss der Holzwerkstoffplatte 10 bildende Aussenschicht 9 aus einem Holzwerkstoff auf.

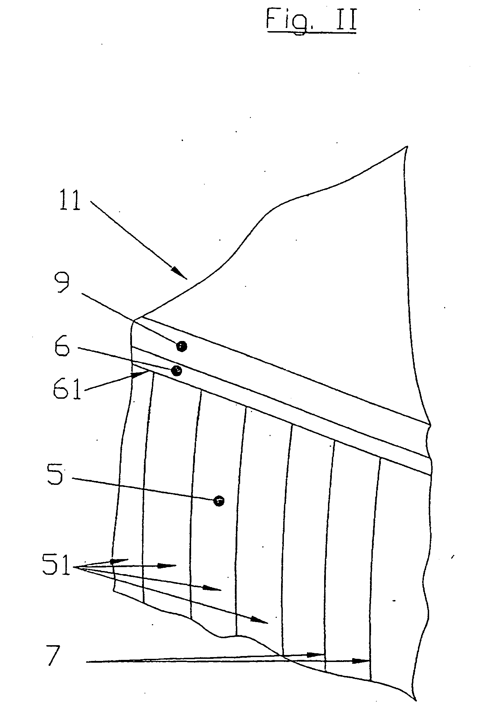

Die identisch aufgebauten beiden Aussenschichten 9 weisen gleiche Dicken zwischen 1,3 mm bis 1o mm auf, sind auf die Mittellage 5 mittels eines ersten Leims 6 als "Flächenleim" aus einem Harnstoff-Formaldehyd-Klebstoff (KUF) oder erfindungsgemäss auch Melamin-Harnstoff-Formaldehyd- Klebstoff (MUF) aufgeleimt, wie in Figur 2 schematisch gezeigt, und können als Spanplatte, MDF-, Furnier- oder als Sperrholzschicht, vorzugsweise Pappelsperrholzschicht mit einer Dichte über 500 kg/m³, vorzugsweise über 700 kg/m³ ausgebildet sein.

Die Mittellage 5 mit einer Dichte von über 400 kg/m³, vorzugsweise 450 kg/m³, ist als aus miteinander mit einem als Weiss- bzw. Staerkeleim ausgebildeten zweiten Leim verleimten einzelnen Stäbchen 7 bestehende, sogenannte Stäbchenlage 5 ausgebildet, deren Holzfasern beziehungsweise Kapillaren 51 (Figur 2) im wesentlichen parallel zueinander sowie rechtwinklig zu jeder Aussenschicht 9 verlaufen. Die einzelnen, zueinander versetzt angeordneten Stäbchen 7 sind dabei durch Absägen von miteinander verleimten Schälfurnieren gebildet und weisen einen rechteckförmigen oder quadratischen Querschnitt mit einer Seitenlaenge von kleiner 4,6 mm, vorzugsweise zwischen 3,9 und 4,1 mm auf.

Ein erfindungsgemässe Holzwerkstoffplatte 10 mit den Massen 2,6 m Höhe, 0,95 m Breite und 54 mm Dicke wurde als Türrohling einer Brandschutztür, die zwei betätigbare Flügel aufweist, einem Brandversuch unterworfen. Hierbei war die Mittellage 4,6 mm und die beiden Aussenlagen aus kreuzweise verlaufendem Furnier 2,2 mm dick. Die Brandschutztür widerstand dem Feuer mehr als eine Stunde.

## Patentansprüche

1. Normal entflammbare Holzwerkstoffplatte (10) mit einer Mittellage (5) und mit zumindest je einer auf diese aufgeleimten, den äusseren Abschluss der Holzwerkstoffplatte (10) bildenden Aussenschicht (9) aus einem Holzwerkstoff beiderseits der Mittellage (5), wobei die Mittellage als aus miteinander verleimten Stäbchen (7) bestehende, sogenannte Stäbchenlage (5) ausgebildet ist, deren Holzfasern parallel zueinander sowie rechtwinklig zu jeder Aussenschicht (9) verlaufen, **dadurch gekennzeichnet, dass** die Aussenschichten (9) auf die Mittellage (5) mittels eines ersten Leims (6) aufgeleimt sind, dass die Stäbchen (7) der Mittellage (5) miteinander mit einem zweiten Leim verleimt sind, dass der erste Leim ein Harnstoff-Formaldehyd-Klebstoff (KUF) und der zweite Leim ein Weiss- oder Stärkeleim ist.

2. Holzwerkstoffplatte nach Anspruch 1, **dadurch gekennzeichnet, dass** die Aussenschicht (9) als Chipboard-, MDF-, Furnier- oder als Sperrholzschicht, ausgebildet ist und dass die Aussenschichten eine Dicke zwischen 1,3 mm bis lo mm aufweisen.

3. Holzwerkstoffplatte nach Anspruch 2, **dadurch gekennzeichnet, dass** die Sperrholzschicht als Pappelsperrholzschicht ausgebildet ist.

4. Holzwerkstoffplatte nach Anspruch 2, **dadurch gekennzeichnet, dass** die beiden Aussenschichten (9) gleiche Dicke aufweisen.

5. Holzwerkstoffplatte nach Anspruch 2 oder 4, **dadurch gekennzeichnet, dass** die beiden Aussenschichten (9) aus demselben Werkstoff aufgebaut sind.

6. Holzwerkstoffplatte nach einem der vorangehenden Anspruche, **dadurch gekennzeichnet, dass** die Aussenschichten (9) eine Dichte über 500 kg/m³ aufweisen.

7. Holzwerkstoffplatte nach einem der vorangehenden Anspruche, **gekennzeichnet durch** eine Gesamtdicke von maximal 58. mm.

8. Holzwerkstoffplatte nach Anspruch 7, **gekennzeichnet durch** eine Gesamtdicke von maximal 44 mm oder 54 mm.

9. Holzwerkstoffplatte nach einem der vorangehenden Anspruche, **dadurch gekennzeichnet, dass** die Stäbchenlage (5) eine Dichte von über 400 kg/m^{3.} aufweist.

10. Holzwerkstoffplatte nach Anspruch 9, **dadurch gekennzeichnet, dass** die Stäbchenlage (5) eine Dichte von über 450 kg/m³ aufweist.

11. Holzwerkstoffplatte nach einem der vorangehenden Anspruche, **dadurch gekennzeichnet, dass** die einzelnen Stäbchen (7) einen rechteckfoermigen oder quadratischen Querschnitt mit einer Seitenlaenge von kleiner 4,6 mm aufweisen.

12. Holzwerkstoffplatte nach Anspruch 11, **dadurch gekennzeichnet, dass** die Seitenlaenge zwischen 3,9 und 4,1 mm liegt.

13. Holzwerkstoffplatte nach einem der vorangehenden Anspruche, **dadurch gekennzeichnet, dass** die Holzfasern (51) der Stäbchen (7) aller Stäbchen der Stäbchenlage (5) parallel zueinander verlaufen und die Stäbchen einzeln zueinander versetzt miteinander mit dem zweiten Leim verklebt sind.

14. Holzwerkstoffplatte nach einem der vorangehenden Anspruche, **dadurch gekennzeichnet, dass** die Stäbchen (7) der Stäbchenlage (5) durch Absägen von miteinander verleimten Schälfurnieren gebildet sind.

15. Verwendung einer Holzwerkstoffplatte nach einem der Ansprüche 1 bis 14 als Türrohling einer Brandschutztür.

## Claims

1. A normally flammable timber-material panel (10) with a middle layer (5) and in each case with at least one outer layer (9) made of a timber-material glued onto the former forming the exterior covering of the timber-material panel (10) on both sides of the middle layer (5), wherein the middle layer is formed as a so-called block layer (5) consisting of blocks (7) glued to one another, of which the wood fibres extend parallel to one another and at right angles to each outer layer (9),
**characterised in that**
the outer layers (9) are glued onto the middle layer (5) by means of a first glue (6), that the blocks (7) of the middle layer (5) are glued to one another with a second glue, that the first glue is a urea-formaldehyde glue (KUF) and the second glue is a casein glue or starch glue.

2. The timber-material panel according to claim 1,
**characterised in that**
the outer layer (9) is formed as a chipboard, MDF, veneer or plywood layer and that the outer layers provide a thickness between 1.3 mm and 10 mm.

3. The timber-material panel according to claim 2,
**characterised in that**
the plywood layer is formed as a poplar plywood layer.

4. The timber-material panel according to claim 2,
**characterised in that**
the two outer layers (9) provide the same thickness.

5. The timber-material panel according to claim 2 or 4,
**characterised in that**
the two outer layers (9) are built up from the same material.

6. The timber-material panel according to any one of the preceding claims,
**characterised in that**
the outer layers (9) provide a density greater than 500 kg/m³.

7. The timber-material panel according to any one of the preceding claims,
**characterised by**
an overall maximum thickness of 58 mm.

8. The timber-material panel according to claim 7,
**characterised by**
an overall maximum thickness of 44 mm or 54 mm.

9. The timber-material panel according to any one of the preceding claims,
**characterised in that**
the block layer (5) provides a density of greater than 400 kg/m³.

10. The timber-material panel according to claim 9,
**characterised in that**
the block layer (5) provides a density of greater than 450 kg/m³.

11. The timber-material panel according to any one of the preceding claims,
**characterised in that**
the individual blocks (7) provide a rectangular or square cross-section with a lateral length of less than 4.6 mm.

12. The timber-material panel according to claim 11,
**characterised in that**
the lateral length is disposed between 3.9 and 4.1 mm.

13. The timber-material panel according to any one of the preceding claims,
**characterised in that**
the wood fibres (51) of the blocks (7) of all blocks of the block layer (5) extend parallel to one another, and the blocks are glued individually offset relative to one another with the second glue.

14. The timber-material panel according to any one of the preceding claims,
**characterised in that**
the blocks (7) of the block layer (5) are formed by sawing off rotary-cut veneers glued to one another.

15. A use of a timber-material panel according to any one of claims 1 to 14 as a door blank for a fire-protection door.

## Revendications

1. Panneau (10) en matériau dérivé du bois normalement inflammable, comportant une couche centrale (5) et au moins une couche extérieure (9) collée sur celle-ci, formant la couche de protection du panneau (10) en matériau dérivé du bois et réalisée dans un matériau dérivé du bois de part et d'autre de la couche centrale (5), ladite couche centrale étant réalisée sous la forme d'une couche lamellée (5), qui est formée par des lamelles (7) collées les unes aux autres et dont les fibres de bois sont orientées parallèlement entre elles et perpendiculairement à chaque couche extérieure (9), **caractérisé en ce que** les couches extérieures (9) sont collées au moyen d'une première colle (6) sur la couche centrale (5), **en ce que** les lamelles (7) de la couche centrale (5) sont collées les unes aux autres au moyen d'une deuxième colle, **en ce que** la première colle est une colle urée-formaldéhyde (KUF) et la deuxième colle est une colle blanche ou colle amylacée.

2. Panneau en matériau dérivé du bois selon la revendication 1, **caractérisé en ce que** la couche extérieure (9) est réalisée sous la forme d'un panneau de particules (chipboard), d'un panneau de fibres à moyenne densité (MDF), d'une feuille de contreplacage ou d'une couche de contreplaqué, et **en ce que** les couches extérieures ont une épaisseur entre 1,3 mm à 10 mm.

3. Panneau en matériau dérivé du bois selon la revendication 2, **caractérisé en ce que** la couche de contreplaqué est réalisée sous la forme d'une couche de contreplaqué de peuplier.

4. Panneau en matériau dérivé du bois selon la revendication 2, **caractérisé en ce que** les deux couches extérieures (9) ont la même épaisseur.

5. Panneau en matériau dérivé du bois selon la revendication 2 ou 4, **caractérisé en ce que** les deux couches extérieures (9) sont réalisées dans le même matériau.

6. Panneau en matériau dérivé du bois selon l'une quelconque des revendications précédentes, **caractérisé en ce que** les couches extérieures (9) ont une densité supérieure à 500 kg/m³.

7. Panneau en matériau dérivé du bois selon l'une quelconque des revendications précédentes, **caractérisé par** une épaisseur totale de 58 mm maximum.

8. Panneau en matériau dérivé du bois selon la revendication 7, **caractérisé par** une épaisseur totale de maximum 44 mm ou 54 mm.

9. Panneau en matériau dérivé du bois selon l'une quelconque des revendications précédentes, **caractérisé en ce que** la couche lamellée (5) a une densité supérieure à 400 kg/m³.

10. Panneau en matériau dérivé du bois selon la revendication 9, **caractérisé en ce que** la couche lamellée (5) a une densité supérieure à 450 kg/m³.

11. Panneau en matériau dérivé du bois selon l'une quelconque des revendications précédentes,
**caractérisé en ce que** les lamelles (7) ont une section rectangulaire ou carrée avec une longueur latérale inférieure à 4,6 mm.

12. Panneau en matériau dérivé du bois selon la revendication 11, **caractérisé en ce que** la longueur latérale se situe entre 3,9 mm et 4,1 mm.

13. Panneau en matériau dérivé du bois selon l'une quelconque des revendications précédentes, **caractérisé en ce que** les fibres de bois (51) des lamelles (7) de toutes les lamelles de la couche lamellée (5) sont orientées parallèlement entre elles et les lamelles, décalées individuellement les unes par rapport aux autres, sont collées les unes aux autres au moyen de la deuxième colle.

14. Panneau en matériau dérivé du bois selon l'une quelconque des revendications précédentes, **caractérisé en ce que** les lamelles (7) de la couche lamellée (5) sont formées par sciage de contreplaqués déroulés, collés entre eux.

15. Utilisation d'un panneau en matériau dérivé du bois selon l'une quelconque des revendications 1 à 14 pour former un flan de porte d'une porte coupe-feu.
